# EUROPEAN PATENT APPLICATION

(11) **EP 3 902 050 A1**
(43) Date of publication of application: **27.10.2021**
(21) Application number: 20791387.2
(22) Date of filing: 20.04.2020
(51) Int. Cl.: H01M 10/0565, H01M 10/42, H01M 10/052, H01M 10/056, H01M 4/38, H01M 4/13

(54) **ELECTROLYTE MEMBRANE FOR ALL-SOLID-STATE BATTERY AND ALL-SOLID-STATE BATTERY COMPRISING SAME**

(30) Priority: 18.04.2019 KR 20190045630
(71) Applicant: LG ENERGY SOLUTION, LTD., Seoul 07335 (KR)
(72) Inventor: LEE, Jung-Pil, Daejeon 34122 (KR); KIM, Eun-Bee, Daejeon 34122 (KR); RYU, Ji-Hoon, Daejeon 34122 (KR); LEE, Suk-Woo, Daejeon 34122 (KR)
(74) Representative: Plasseraud IP
(86) International application number: PCT/KR2020/005229
(87) International publication number: WO 2020/214008

(57) **Abstract**

The present disclosure relates to a solid electrolyte membrane for suppressing the growth of lithium dendrites and an all-solid-state battery comprising the same, and the solid electrolyte membrane comprises a solid electrolyte material and metal particles, wherein the metal particles form an alloy with lithium.

## Description

### TECHNICAL FIELD

The present application claims the benefit of Korean Patent Application No. 10-2019-0045630 filed on April 18, 2019 with the Korean Intellectual Property Office, the disclosure of which is incorporated herein by reference in its entirety. The present disclosure relates to an electrolyte membrane for an all-solid-state battery for suppressing the growth of lithium dendrites and an all-solid-state battery comprising the electrolyte membrane.

### BACKGROUND ART

When deformed by impacts or external environment, lithium ion batteries using liquid electrolytes may leak the liquid electrolytes or undergo combustion due to short circuits, causing overheat or explosions. Accordingly, it is very important to develop solid electrolytes with safety in the field of lithium ion secondary batteries.

Lithium secondary batteries using solid electrolytes have enhanced safety of the batteries, prevent the leakage of the electrolytes, leading to improved reliability of the batteries, and are easy to manufacture thin batteries. Additionally, they have improved energy density due to the use of lithium metal for the negative electrode, and accordingly, together with small secondary batteries, they gain much attention as next-generation batteries in expectation of high capacity secondary batteries for electric vehicles.

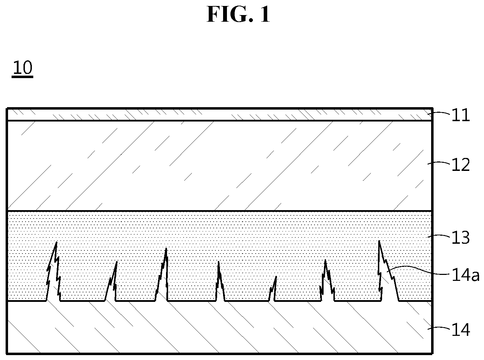

Solid electrolyte materials generally include polymer-based solid electrolyte, oxide-based solid electrolyte and sulfide-based solid electrolyte materials. When a thin-film free standing type electrolyte membrane is manufactured using the solid electrolyte material alone, defects such as tears or cracks or separation of the electrolyte material may occur during the manufacture of the battery or while in use. Particularly, when lithium metal is used as the negative electrode active material, there is a problem with the growth of lithium dendrites from the surface of the negative electrode, and when the grown lithium dendrites contact the positive electrode, a short circuit occurs in the battery. FIG. 1 is a diagram showing an all-solid-state battery manufactured with the solid electrolyte membrane interposed between the negative electrode and the positive electrode. In the all-solid-state battery, the solid electrolyte membrane serves as an electrical insulator for the positive electrode and the negative electrode in place of the separator. In particular, when a polymer material is used as the solid electrolyte, the solid electrolyte membrane may be damaged by the growth of lithium dendrites. Referring to FIG. 1, lithium dendrites grown from the negative electrode may damage the solid electrolyte membrane, causing a short circuit may occur between the positive electrode and the negative electrode. Additionally, an inorganic solid electrolyte generally includes a particulate ion conducting inorganic material with a layered structure, and a plurality of pores is formed by the interstitial volume between the particles. Lithium dendrites may grow in the space provided by the pores, and when the lithium dendrites grown through the pores contact the positive electrode, a short circuit may occur. Accordingly, there is a need to develop electrolyte membranes for all-solid-state batteries for suppressing lithium dendrite growth.

### DISCLOSURE

### Technical Problem

The present disclosure is designed to solve the above-described technical problem, and therefore the present disclosure is directed to providing a solid electrolyte membrane for suppressing the growth of lithium dendrites and an all-solid-state battery comprising the same. These and other objects and advantages of the present disclosure will be understood by the following description. Additionally, it will be readily appreciated that the objects and advantages of the present disclosure may be realized by means or methods described in the appended claims and a combination thereof.

### Technical Solution

The present disclosure relates to a solid electrolyte membrane for solving the above-described technical problem. A first aspect of the present disclosure relates to the solid electrolyte membrane, and the solid electrolyte membrane comprises a solid electrolyte material and metal particles, wherein the metal particles are capable of forming an alloy with lithium.

According to a second aspect of the present disclosure, in the first aspect, the metal particles have Li metal nucleation overpotential of 100 mV or less.

According to a third aspect of the present disclosure, in at least one of the first and second aspects, the solid electrolyte membrane comprises at least one of Au, Ag, Pt, Zn, Mg, Al, Ni and Bi as the metal particles.

According to a fourth aspect of the present disclosure, in at least one of the first to third aspects, the solid electrolyte material comprises a polymer-based solid electrolyte material.

According to a fifth aspect of the present disclosure, in at least one of the first to fourth aspects, the polymer-based solid electrolyte material comprises a polymer resin and a lithium salt, and exhibits ionic conductivity of 1 × 10⁻⁷ S/cm or above.

According to a sixth aspect of the present disclosure, in at least one of the first to fifth aspects, the metal particles have a particle size of 1 nm to 5 µm.

According to a seventh aspect of the present disclosure, in at least one of the first to sixth aspects, the metal particles are present in an amount of 0.1 wt% to 20 wt% based on 100 wt% of the solid electrolyte membrane.

According to an eighth aspect of the present disclosure, in any one of the first to seventh aspects, the solid electrolyte membrane for an all-solid-state battery comprises a solid electrolyte portion not including the metal particles on one or two outermost surfaces thereof.

A ninth aspect of the present disclosure relates to an all-solid-state battery comprising the solid electrolyte membrane according to at least one of the first to eighth aspects.

According to a tenth aspect of the present disclosure, in the ninth aspect, the all-solid-state battery comprises a negative electrode comprising a lithium metal as a negative electrode active material, or consisting of a current collector with no negative electrode active material.

According to an eleventh aspect of the present disclosure, in any one of the ninth and tenth aspects, the all-solid-state battery comprises a negative electrode, a positive electrode and a solid electrolyte membrane, wherein the solid electrolyte membrane is interposed between the negative electrode and the positive electrode, at least one of the negative electrode and the positive electrode comprises a solid electrolyte material, and the solid electrolyte material comprises at least one of a polymer-based solid electrolyte, an oxide-based solid electrolyte and a sulfide-based solid electrolyte.

According to a twelfth aspect of the present disclosure, in the eleventh aspect, the all-solid-state battery comprises a solid electrolyte portion disposed on a contact area of the solid electrolyte membrane with the negative electrode.

### Advantageous Effects

The solid electrolyte membrane according to the present disclosure includes metal capable of forming an alloy with lithium to guide the horizontal growth of lithium dendrites. Even though lithium dendrites grow from the negative electrode, it is possible to prevent the lithium dendrites from growing in the vertical direction and going through the solid electrolyte membrane or contacting the positive electrode. Accordingly, when the solid electrolyte membrane is applied to a lithium metal battery including lithium metal as a negative electrode active material, the life characteristics of the battery are improved.

### BRIEF DESCRIPTION OF THE DRAWINGS

The accompanying drawings illustrate a preferred embodiment of the present disclosure, and together with the detailed disclosure, serve to provide a further understanding of the technical aspects of the present disclosure, and the present disclosure should not be construed as being limiting to the drawings. In the drawings, for clarity of description, the shape, size, scale or proportion of the elements may be exaggerated for emphasis.
FIG. 1 is a schematic diagram of a cross-sectional structure of a conventional solid electrolyte battery.
FIG. 2 is a schematic diagram of a cross-sectional structure of a solid electrolyte membrane according to the present disclosure.
FIG. 3 is an enlarged view of section A in FIG. 2, schematically showing the mechanism in which vertically growing lithium dendrites grow in the horizontal direction after forming an alloy with metal particles.

### DETAILED DESCRIPTION

Hereinafter, the embodiments of the present disclosure will be described in detail. Prior to the description, it should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation. Therefore, the context in the embodiments described herein is just a most preferred embodiment of the present disclosure, but not intended to fully describe the technical aspects of the present disclosure, so it should be understood that other equivalents and modifications could have been made thereto at the time the application was filed.

The term ┌comprises┘ when used in this specification, specifies the presence of stated elements, but does not preclude the presence or addition of one or more other elements, unless the context clearly indicates otherwise.

The terms ┌about┘ and ┌substantially┘ are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

┌A and/or B┘ when used in this specification, specifies ┌either A or B or both┘.

The terms as used in the following detailed description are for the purpose of convenience, but not intended to being limiting. The terms 'right', 'left' 'top' and 'bottom' refer to the directions in the drawings to which reference is made. The terms 'inward' and 'outward' refer to the directions toward or away from the geometrical centers of the designated devices, systems and elements thereof. The terms 'front', 'rear', 'up', 'down' and related words and phrases refer to the locations and directions in the drawings to which reference is made and are not limiting. These terms include the above words and their derivatives and synonyms.

The present disclosure relates to an electrolyte membrane for an all-solid-state battery and an all-solid-state battery comprising the same. The solid electrolyte membrane according to the present disclosure suppresses the vertical growth of lithium dendrites, thereby significantly improving the life characteristics of batteries, especially when applied to batteries using lithium metal as a negative electrode active material.

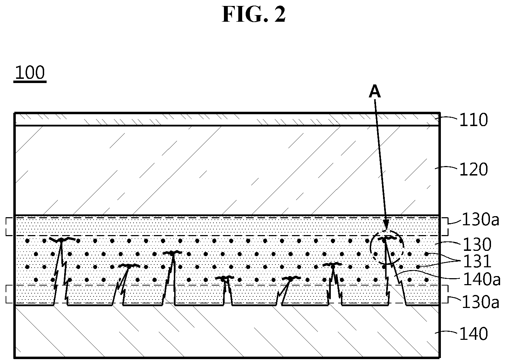

FIG. 2 is a schematic diagram of the solid electrolyte membrane according to the present disclosure. The solid electrolyte membrane of the present disclosure will be described in detail with reference to FIG. 2.

The solid electrolyte membrane according to the present disclosure includes a solid electrolyte material and metal particles. In an embodiment of the present disclosure, the solid electrolyte membrane is interposed between the positive electrode and the negative electrode in an all-solid-state battery and acts as an insulating and ion conducting channel. The solid electrolyte membrane has ionic conductivity of 1.0 × 10⁻⁷ S/cm or above, and preferably 1.0 × 10⁻⁵ S/cm or above. The solid electrolyte membrane includes a solid electrolyte material and metal particles, and the metal particles are dispersed and distributed in the solid electrolyte membrane. FIG. 2 schematically illustrates the all-solid-state battery comprising the solid electrolyte membrane according to an embodiment of the present disclosure. Referring to FIG. 2, metal ions are dispersed and distributed in the solid electrolyte membrane.

In the present disclosure, the metal particles may form an alloy by reaction with metal lithium. Additionally, the metal particles serve to guide the growth direction of lithium dendrites, and the metal particles react with lithium dendrites vertically growing from the negative electrode toward the positive electrode (i.e., grow along the thickness direction of the solid electrolyte membrane) so that the lithium dendrites are guided to grow in the horizontal direction (i.e., grow along the plane direction of the solid electrolyte membrane). That is, lithium dendrites are formed on the surface of the negative electrode and grow toward the positive electrode, and when the lithium dendrites contact the metal particles, the dendrite growth is shifted in the horizontal direction. In an embodiment of the present disclosure, the metal particles may be, for example, Au, Ag, Pt, Zn, Mg, Al, Ni and Bi, forming alloys with Li, and the solid electrolyte membrane according to the present disclosure may include at least one of them. Additionally, the metal particles may have Li metal nucleation overpotential of 100 mV or less, and preferably 50 mV or less. Here, the Li metal nucleation overpotential refers to a difference between the bottom of the voltage drop and the flat region of the plateau voltage at the time of alloy formation with lithium. Here, the lower overpotential is more advantageous for alloy formation upon contact with Li dendrites.

In an embodiment of the present disclosure, the particle size of the metal particles is 1 nm to 5 µm. For example, the particle size may be adjusted in the range of 10 nm to 1 µm. When the particle size is below the above-described range, it is easy to form an alloy upon contact with lithium dendrites, but the metal particles are not uniformly dispersed in the solid electrolyte membrane. On the contrary, when the particles are very large in size, it is difficult to form an alloy.

In the present disclosure, the metal particles have a spherical shape or a quasi-spherical shape similar to a spherical shape for stable structure in the formation of seed crystals upon contact with lithium dendrites. However, the metal particles are not limited to the spherical or quasi-spherical shape.

The metal particles are present in an amount of 0. 1 wt% to 20 wt%, and preferably 1 wt% to 10 wt% based on 100 wt% of the solid electrolyte membrane. When the amount of the metal particles satisfies the above-described range, it is possible to provide a remarkable effect on the suppression of lithium dendrite growth and improvement of life characteristics without decrease in ionic conductivity of the solid electrolyte membrane.

In the case of lithium, energy required for dendrite growth is lower than energy required for seed crystal production, and thus lithium deposition leads to dendrite growth. However, as described above, materials having low Li metal nucleation overpotential are thermodynamically similar to lithium. Accordingly, when the metal particles included in the solid electrolyte contact the dendritically grown lithium metal (lithium dendrites), they are electrically connected to form new seed crystals, i.e., a lithium alloy around the metal particles, and lithium is deposited by the selective reduction of Li ions on the surface of the seed crystals. During deposition, lithium grows around the seed crystals or in the horizontal direction.

As described above, the electrolyte membrane according to the present disclosure suppresses penetration of lithium dendrites growing through the electrolyte membrane, thereby improving the durability of the solid electrolyte membrane. Additionally, even though lithium dendrites grow, the lithium dendrites contact the positive electrode less frequently, resulting in significant delays in the short circuit occurrence time during the operation of the battery.

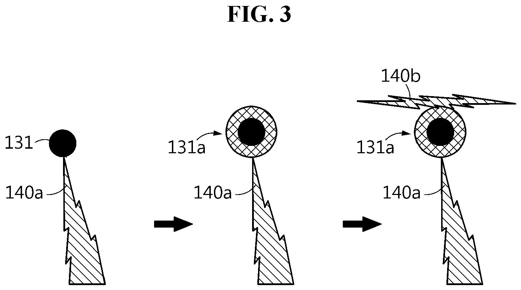

FIG. 2 schematically illustrates the all-solid-state battery comprising the solid electrolyte membrane according to the present disclosure. The all-solid-state battery includes a positive electrode current collector 110, a positive electrode active material layer 120, a solid electrolyte membrane 130 and a lithium metal negative electrode 140, stacked in that order. Here, metal particles 131 are dispersed and distributed in the solid electrolyte membrane. During the operation of the battery, lithium dendrites vertically grow from the lithium metal negative electrode 140, and as shown in FIG. 3, when the lithium dendrites contact the metal particles 131, the metal particles and the lithium form an alloy, producing seed crystals, and subsequently, the lithium dendrites grow in the horizontal direction. In FIG. 2, 140a indicates the vertical growth of lithium dendrites, and 140b indicates the horizontal growth. FIG. 3 is an enlarged view of section A in FIG. 2, schematically showing the formation of seed crystals and the horizontal growth of lithium dendrites.

In an embodiment of the present disclosure, the solid electrolyte material exhibits ionic conductivity, and may include at least one of a polymer-based solid electrolyte material, an oxide-based solid electrolyte material and a sulfide-based solid electrolyte.

The polymer-based solid electrolyte is a composite of a lithium salt and a polymer resin, i.e., a polymer electrolyte material formed by adding a polymer resin to a solvated lithium salt, and may exhibit ionic conductivity of about 1 × 10⁻⁷ S/cm or above, and preferably about 1 × 10⁻⁵ S/cm or above.

Non-limiting examples of the polymer resin may include at least one of polyether-based polymer, polycarbonate-based polymer, acrylate-based polymer, polysiloxane-based polymer, phosphazene-based polymer, polyethylene derivatives, alkylene oxide derivatives such as polyethylene oxide, phosphate ester polymer, poly agitation lysine, polyester sulfide, polyvinyl alcohol, polyvinylidene fluoride and polymer including ionic dissociable groups. Additionally, the polymer resin may include, for example, a comblike polymer resin, a crosslinked polymer resin and a branched copolymer obtained by copolymerization of a comonomer of amorphous polymer such as PMMA, polycarbonate, polysiloxane (pdms) and/or phosphazene in the main chain of polyethylene oxide (PEO), and the polymer electrolyte may include at least one of them as the polymer resin.

In the electrolyte of the present disclosure, the lithium salt is an ionizable lithium salt and may be represented as Li⁺X⁻. The anion of the lithium salt is not particularly limited, and may include, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The oxide-based solid electrolyte material contains oxygen (O) and has ionic conductivity of metal belonging to Group I or II of the periodic table. Non-limiting examples of the oxide-based solid electrolyte material may include at least one selected from LLTO-based compounds, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (0 ≤ x ≤ 1, 0 ≤ y ≤ 1), LiAlₓZr₂₋ₓ(PO₄)₃ (0 ≤ x ≤ 1, 0 ≤ y ≤ 1), LiTiₓZr₂₋ₓ(PO₄)₃ (0 ≤ x ≤ 1, 0 ≤ y ≤ 1), LISICON-based compounds, LIPON-based compounds, perovskite-based compounds, NASICON-based compounds and LLZO-based compounds. However, the oxide-based solid electrolyte material is not particularly limited thereto.

The sulfide-based solid electrolyte material contains sulfur (S) and has ionic conductivity of metal belonging to Group I or Group II of the periodic table, and may include Li-P-S-based glass or Li-P-S-based glass ceramics. Non-limiting examples of the sulfide-based solid electrolyte may include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS. However, the sulfide-based solid electrolyte material is not particularly limited thereto.

In an embodiment of the present disclosure, the solid electrolyte membrane may further include a solid electrolyte portion not including the metal particles to a predetermined thickness on at least one side. That is, the solid electrolyte portion occupies the predetermined thickness from one surface of the solid electrolyte membrane, and does not include the metal particles. The solid electrolyte portion may be integrally formed with the solid electrolyte membrane, or alternatively, after the solid electrolyte membrane and the solid electrolyte portion are separately prepared, they may be stacked and integrated into one, for example, by pressing. When the solid electrolyte membrane including the solid electrolyte portion is introduced into the all-solid-state battery, the solid electrolyte portion is preferably placed in contact with the two electrodes. With the solid electrolyte portion, it is possible to avoid unnecessary reactions between the metal particles and the negative or positive electrode.

In the present disclosure, the metal particles may be placed in no direct contact with the electrode and the electrode active material within the electrode. In an embodiment of the present disclosure, the solid electrolyte membrane may include the solid electrolyte portion not including the metal particles on at least one or both outermost side surfaces. For example, one outermost side may contact the negative electrode. When the solid electrolyte portion is disposed on the surface of the solid electrolyte membrane, the metal particles do not come in direct contact with the electrode and the electrode active material included in the electrode. FIG. 2 schematically illustrates the solid electrolyte membrane according to an embodiment of the present disclosure and the electrode assembly including the same. Referring to FIG. 2, the metal particles are included in the solid electrolyte membrane, and the solid electrolyte portion 130a not including the metal particles is disposed on the two outer sides of the solid electrolyte membrane. When the solid electrolyte portion 130a not including the metal particles is disposed on the outer side of the solid electrolyte membrane, the metal particles do not directly contact the electrode active material and are spaced apart from the electrode active material, and as a result, it is possible to control the further vertical growth of lithium dendrites penetrating and grown into the solid electrolyte membrane without affecting the electrochemical performance of the electrode active material in the electrode.

In an embodiment of the present disclosure, the solid electrolyte membrane may further include a binder resin where necessary. The binder resin may be introduced for binding of the solid electrolyte materials and binding of the solid electrolyte layer and the battery elements (for example, support layers and/or electrodes) stacked on the two sides of the solid electrolyte layer. The material of the binder resin is not particularly limited and may be appropriately selected within the range of components used as binders for electrochemical devices.

In the present disclosure, the solid electrolyte membrane is about 100 µm or less, and preferably about 15 µm to 90 µm in thickness. The solid electrolyte membrane may have an appropriate thickness within the above-described range, taking into account the ionic conductivity, the physical strength and the energy density of the used battery. For example, in terms of the ionic conductivity or energy density, the thickness may be 80 µm or less, or 70 µm or less, or 60 µm or less, or 50 µm or less. In terms of the physical strength, the thickness may be 20 µm or more, or 30 µm or more, or 40 µm or more. Along with the above-described thickness range, the solid electrolyte membrane may have the tensile strength of about 500 kgf/cm² to about 2,000 kgf/cm². Additionally, the solid electrolyte membrane may have the porosity of 15% or less or about 10% or less.

The solid electrolyte membrane according to the present disclosure may be prepared, for example, by the following method, but is not particularly limited thereto.

First, a solid electrolyte material and metal particles are added to a suitable solvent to prepare a slurry for preparing a solid electrolyte membrane.

The metal particles preferably have a spherical shape or a quasi-spherical shape for stable structure in the formation of seed crystals upon contact with lithium dendrites. However, the shape of the metal particles is not limited to the spherical or quasi-spherical shape. The concentration of the slurry may be appropriately adjusted to a sufficient level for uniform coating and is not limited to a specific range. The solvent may include, without limitation, any type of solvent that can be removed through a drying process without changing the properties of the solid electrolyte material and the metal particles, and may be appropriately selected according to the solid electrolyte material used. For example, when alkylene oxide such as ethylene oxide (PEO) is used for polymer resin, acetonitrile may be used for the solvent. Subsequently, the slurry is applied to a release sheet such as a terephthalate film and formed into the shape of a film having a predetermined thickness. A known coating method such as a doctor blade may be used to apply and form. Subsequently, drying is performed to remove the solvent, thereby obtaining the solid electrolyte membrane.

Additionally, the present disclosure provides an all-solid-state battery comprising the above-described solid electrolyte membrane. The all-solid-state battery comprises a positive electrode, a negative electrode and a solid electrolyte membrane. In an embodiment of the present disclosure, the negative electrode may comprise lithium metal as a negative electrode active material.

In the present disclosure, the negative electrode and the positive electrode may comprise a current collector and an electrode active material layer formed on the surface of the current collector, and the active material layer may comprise electrode active material particles and a solid electrolyte material. In an embodiment of the present disclosure, the negative electrode may be manufactured using the current collector itself without forming the active material layer on the surface of the current collector. Additionally, each electrode may further comprise at least one of a conductive material and a binder resin where necessary. Additionally, the electrode may further comprise various types of additives to supplement or improve the physical and chemical properties of the electrode.

In the present disclosure, the negative electrode active material may include lithium metal as the negative electrode active material of lithium ion secondary batteries, and in addition to the lithium metal, any material that can be used as the negative electrode active material may be used. For example, the negative electrode active material may further include at least one selected from carbon such as non-graphitizable carbon and graphite-based carbon; metal composite oxide such as LiₓFe₂O₃ (0 ≤ x ≤ 1), LiₓWO₂ (0 ≤ x ≤ 1), SnₓMe₁₋ₓMe^{a}_{y}O_{z} (Me: Mn, Fe, Pb, Ge; Me^{a}: Al, B, P, Si, Group I, Group II and Group III elements of the periodic table, halogen (0 < x ≤ 1 ; 1 ≤ y ≤3 ; 1 ≤ z ≤ 8)); lithium alloys; silicon-based alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃ Bi₂O₄ and Bi₂O_{5;} conductive polymer such as polyacetylene; Li-Co-Ni based materials; titanium oxide; lithium titanium oxide.

The electrode active material of the positive electrode may include, without limitation, any type of positive electrode active material of lithium ion secondary batteries. For example, the positive electrode active material may include layered compounds such as lithium cobalt oxide (LiCoO₂) and lithium nickel oxide (LiNiO₂) or compounds with one or more transition metal substitution; lithium manganese oxide of Formula Li₁₊ₓMn₂₋ₓO₄ (x is 0 to 0.33), LiMnO₃, LiMn₂O₃, LiMnO₂; lithium copper oxide (Li₂CuO₂); vanadium oxide such as LiV₃O₈, LiV₃O₄, V₂O₅ and Cu₂V₂O₇; Ni-site type lithium nickel oxide represented by Formula LiNi₁₋ₓMₓO₂ (M = Co, Mn, Al, Cu, Fe, Mg, B or Ga, and x = 0.01 to 0.3); lithium manganese composite oxide represented by Formula LiMn₁₋ₓMₓO₂ (M = Co, Ni, Fe, Cr, Zn or Ta, x = 0.01 to 0.1) or Li₂Mn₃MO₈ (M = Fe, Co, Ni, Cu or Zn); lithium manganese composite oxide of spinel structure represented by LiNiₓMn₂₋ₓO₄; LiMn₂O₄ with partial substitution of alkali earth metal ion for Li in Formula; disulfide compounds; Fe₂(MoO₄)₃. However, the positive electrode active material is not limited thereto.

In the present disclosure, the current collector may be, for example, a metal plate that exhibits electrical conductivity, and a suitable current collector may be used according to the polarity of the electrode among the current collectors that are well known in the field of secondary batteries.

In the present disclosure, the conductive material is generally included in an amount of 1 wt% to 30 wt% based on the total weight of the mixture including the electrode active material. The conductive material is not limited to a particular type and may include those having conductivity without causing a chemical change in the corresponding battery, for example, at least one selected from graphite such as natural graphite or artificial graphite; carbon black such as carbon black, acetylene black, ketjen black, channel black, furnace black, lamp black, and thermal black; conductive fibers such as carbon fibers or metal fibers; metal powder such as fluorocarbon, aluminum and nickel powder; conductive whiskers such as zinc oxide and potassium titanate; conductive metal oxide such as titanium oxide; conductive materials such as polyphenylene derivatives.

In the present disclosure, the binder resin is not limited to a particular type and may include any type of component that assists in the binding of the active material and the conductive material and binding to the current collector, for example, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, fluorine rubber and a variety of copolymers. The binder resin may be generally included in the range of 1 wt% to 30 wt%, or 1 wt% to 10 wt% based on 100 wt% of the electrode layer.

In the present disclosure, each electrode active material layer may comprise at least one type of additive of an oxidation stabilizing agent, a reduction stabilizing agent, a flame retardant, a heat stabilizer and an antifogging agent where necessary.

In the present disclosure, the solid electrolyte material included in the electrode may include at least one of a polymer-based solid electrolyte, an oxide-based solid electrolyte and a sulfide-based solid electrolyte, and with regard to the description of each electrolyte material, a reference is made to the foregoing description.

In the solid electrolyte material, in the case of the positive electrode, electrolyte materials with good oxidation stability may be used as the solid electrolyte. In the case of the negative electrode, electrolyte materials with good reduction stability may be used as the solid electrolyte. However, the present disclosure is not limited thereto, and due to the main role of transporting lithium ions in the electrode, any material having high ionic conductivity of, for example, 10⁻⁷ s/cm or above, or 10⁻⁵ s/cm or above, may be used without limitation.

Additionally, the present disclosure provides a secondary battery having the above-described structure. Additionally, the present disclosure provides a battery module including the secondary battery as a unit battery, a battery pack including the battery module and a device including the battery pack as a power source. In this instance, a specific example of the device may include, but is not limited to, power tools operated by power from an electric motor; electric vehicles including Electric Vehicles (EVs), Hybrid Electric Vehicles (HEVs), Plug-in Hybrid Electric Vehicles (PHEVs); electric two wheelers including E-bikes and E-scooters; electric golf carts; and power storage systems.

Hereinafter, the present disclosure is described in more detail through examples, but the following examples are provided to describe the present disclosure by way of illustration, and the scope of the present disclosure is not limited thereto.

### Example 1

### 1. Preparation of electrolyte film containing Li dendrite guide material

An electrolyte film is prepared by the following method. Polyethylene oxide (PEO) (Mw = 4,000,000 g/mol) is dissolved in a solvent, acetonitrile (AN) to prepare a 4 wt% polymer solution. In this instance, a lithium salt LiTFSI is added such that [EO]/[Li⁺] = 18/1 (molar ratio). The polymer solution is stirred overnight at 60°C to sufficiently dissolve the PEO and the lithium salt. Subsequently, gold nanoparticles (Sigma-Aldrich, particle size of 100 nm) are added, without further purification, to the polymer solution in an amount of 1 wt% based on the weight of the electrolyte membrane, followed by further stirring for one day. Subsequently, an additive solution including an initiator and a curing agent is prepared. The curing agent is polyethylene glycol diacrylate (PEGDA) (Mw = 575), and the initiator is benzoyl peroxide (BPO). The PEGDA is present in an amount of 20 wt% based on the PEO, and the BPO is present in an amount of 1 wt% based on the PEGDA. The used solvent is acetonitrile. The additive solution is stirred for about 1 hour to mix the added components well. Subsequently, the additive solution is added to the polymer solution and the two solutions are sufficiently mixed together. The mixed solution is applied and coated on a release film using a doctor blade. The coating gap is 800 µm, and the coating speed is 20 mm/min. The release film coated with the solution is moved to a glass plate, keeping it horizontal, dried overnight at room temperature, and dried under a vacuum at 100°C for 12 hours. In this way, an electrolyte film is obtained. The obtained electrolyte layer is about 50 µm in thickness.

### 2. Preparation of positive electrode

To prepare a slurry, an electrode active material NCM811(LiNi_{0.8}Co_{0.1}Mn_{0.1}O₂), a conductive material vapor grown carbon fibers (VGCFs) and a polymer-based solid electrolyte (PEO+LiTFSI, 18: 1 mole ratio) are mixed at a weight ratio of 80: 3: 17, and the mixture is added to acetonitrile and stirred to prepare an electrode slurry. The electrode slurry is applied to a 20 µm thick aluminum current collector using a doctor blade, and the result is dried under a vacuum at 120°C for 4 hours. Subsequently, the vacuum dried result is rolled using a roll press to obtain an electrode having the electrode loading of 2 mAh/cm², the electrode layer thickness of 48 µm and the porosity of 22 vol%.

### 3. Manufacturing of battery

The prepared positive electrode is punched into a round shape of 1.4875 cm². A lithium metal thin film cut into a round shape of 1.7671 cm² is prepared as a counter electrode. The obtained solid electrolyte layer is interposed between the two electrodes to manufacture a coin-type half-cell.

### Example 2

A solid electrolyte membrane is prepared by the same method as Example 1, except that the Li dendrite guide material is present in an amount of 2 wt%. Additionally, a battery is manufactured by the same method as Example 1 using the prepared solid electrolyte membrane.

### Example 3

A solid electrolyte membrane is prepared by the same method as Example 1, except that the Li dendrite guide material is present in an amount of 10 wt%. Additionally, a battery is manufactured by the same method as Example 1 using the prepared solid electrolyte membrane.

### Example 4

A solid electrolyte membrane is prepared by the same method as Example 1, except that silver nanoparticles (Sigma-Aldrich, 100 nm) are used as the Li dendrite guide material and the amount used is 2 wt%. Additionally, a battery is manufactured by the same method as Example 1 using the prepared solid electrolyte membrane.

### Comparative Example 1

A solid electrolyte membrane is prepared by the same method as Example 1, except that the Li dendrite guide material is not used. Additionally, a battery is manufactured by the same method as Example 1 using the prepared solid electrolyte membrane.

### Experimental Example 1: Evaluation of ionic conductivity

Ionic conductivity is measured using the solid electrolyte membranes prepared in each Example and Comparative Example. The solid electrolyte membranes prepared in each Example and Comparative Example are cut into a round shape of 1.7671 cm². The solid electrolyte membrane is interposed between two sheets of stainless steel (SUS) to manufacture a coin cell. The electrochemical impedance is measured under the amplitude of 10 mV and the scan range of 500 Khz to 20 MHz at 60°C using an analyzer (VMP3, Bio logic science instrument), and ionic conductivity is calculated based on the measurements.

### Experimental Example 2: Evaluation of initial discharge capacity and life characteristics

The initial discharge capacity is evaluated by charging and discharging the batteries manufactured in Examples 1 to 4 and Comparative Example 1 at 0.05C, 60°C.
Charge condition: CC (constant current) / CV (constant voltage), (4.15V, 0.005C current cut-off)
Discharge condition: CC (constant current) condition 3V, (0.05C)

In the life evaluation during charging and discharging at 0.1C, the short circuit occurrence time is determined as the point in time (cycle) of abnormal behavior of voltage (unstable voltage change) during charging.

**[Table 1]**

| | Ionic conductivity (S/cm, 60°C) | Initial discharge capacity (mAh/g, 4.15V) | Short circuit occurrence time (cycle) |
|---|---|---|---|
| Example 1 | 1E-04 (1X10⁻⁴) | 156 | 11 |
| Example 2 | 9E-05 (9X10⁻⁵) | 151 | 17 |
| Example 3 | 8E-05 (8X10⁻⁵) | 147 | 24 |
| Example 4 | 9E-05 (9X10⁻⁵) | 150 | 14 |
| Comparative Example 1 | 1E-04 (1X10⁻⁴) | 158 | 5 |

As shown in the above results, it can be seen that there are significant delays in the short circuit occurrence time during the operation of the battery due to the addition of the metal particles to the solid electrolyte membrane. This is because the metal particles are properly dispersed and distributed in the solid electrolyte membrane, and when they contact the Li dendrites grown from the negative electrode, the metal particles guide the growth direction of Li dendrites in the plane direction of the solid electrolyte membrane, not in the thickness direction. In this instance, it is possible to maximize the life characteristics of the battery by appropriately adjusting the amount of the metal particles.

### [Description of reference numbers]

10 conventional all-solid-state battery, 11 positive electrode current collector, 12 positive electrode active material layer, 13 solid electrolyte membrane, 14 lithium metal negative electrode, 14a lithium dendrite, 100 all-solid-state battery, 110 positive electrode current collector, 120 positive electrode active material layer, 130 solid electrolyte membrane, 140a lithium dendrite, 140b guided horizontally grown lithium dendrite, 140 lithium metal negative electrode, 131 metal particle, 131a alloy with lithium

## Claims

1. A solid electrolyte membrane for an all-solid-state battery comprising a solid electrolyte material and metal particles, wherein the metal particles are capable of forming an alloy with lithium.

2. The solid electrolyte membrane for an all-solid-state battery according to claim 1, wherein the metal particles have Li metal nucleation overpotential of 100 mV or less.

3. The solid electrolyte membrane for an all-solid-state battery according to claim 1, wherein the solid electrolyte membrane comprises at least one of Au, Ag, Pt, Zn, Mg, Al, Ni and Bi as the metal particles.

4. The solid electrolyte membrane for an all-solid-state battery according to claim 1, wherein the solid electrolyte material comprises a polymer-based solid electrolyte material.

5. The solid electrolyte membrane for an all-solid-state battery according to claim 1, wherein the polymer-based solid electrolyte material comprises a polymer resin and a lithium salt, and exhibits ionic conductivity of 1 × 10⁻⁷ S/cm or above.

6. The solid electrolyte membrane for an all-solid-state battery according to claim 1, wherein the metal particles have a particle size of 1 nm to 5 µm.

7. The solid electrolyte membrane for an all-solid-state battery according to claim 1, wherein the metal particles are present in an amount of 0.1 wt% to 20 wt% based on 100 wt% of the solid electrolyte membrane.

8. The solid electrolyte membrane for an all-solid-state battery according to claim 1, wherein the solid electrolyte membrane for an all-solid-state battery comprises a solid electrolyte portion not including the metal particles on one or two outermost surfaces thereof.

9. An all-solid-state battery comprising the solid electrolyte membrane according to any one of claims 1 to 8.

10. The all-solid-state battery according to claim 9, wherein the all-solid-state battery comprises a negative electrode comprising a lithium metal as a negative electrode active material, or consisting of a current collector with no negative electrode active material.

11. The all-solid-state battery according to claim 9, wherein the all-solid-state battery comprises a negative electrode, a positive electrode and a solid electrolyte membrane,
the solid electrolyte membrane is interposed between the negative electrode and the positive electrode,
at least one of the negative electrode and the positive electrode comprises a solid electrolyte material, and
the solid electrolyte material comprises at least one of a polymer-based solid electrolyte, an oxide-based solid electrolyte and a sulfide-based solid electrolyte.

12. The all-solid-state battery according to claim 11, wherein the all-solid-state battery comprises a solid electrolyte portion disposed on a contact area of the solid electrolyte membrane with the negative electrode.
